# EUROPÄISCHE PATENTSCHRIFT

(11) **EP 2 651 657 B1**
(45) Veröffentlichungstag und Bekanntmachung des Hinweises auf die Patenterteilung: **02.03.2016**
(21) Anmeldenummer: 11790874.9
(22) Anmeldetag: 17.11.2011
(51) Int. Cl.: B44C 1/24, B44F 1/14, B44F 7/00, B44F 9/08

(54) **VERFAHREN ZUR ERZEUGUNG VON DREIDIMENSIONALEN MUSTERN IN BESCHICHTUNGEN**
PROCESS FOR CREATING THREE-DIMENSIONAL PATTERNS IN COATINGS
PROCÉDÉ DE PRODUCTION DE MOTIFS TRIDIMENSIONNELS DANS DES REVÊTEMENTS

(30) Priorität: 15.12.2010 DE 102010054528
(43) Veröffentlichungstag der Anmeldung: 23.10.2013
(73) Patentinhaber: Merck Patent GmbH, 64293 Darmstadt (DE)
(72) Erfinder: CLAUTER, Peter, 64319 Pfungstadt (DE); GOETZ, Thomas, 64297 Darmstadt (DE)
(86) Internationale Anmeldenummer: PCT/EP2011/005804
(87) Internationale Veröffentlichungsnummer: WO 2012/079674

(56) Entgegenhaltungen:
- EP-A2- 0 532 340
- EP-A2- 1 879 154
- WO-A1-01/85473
- WO-A1-2005/049745
- WO-A1-2008/031170
- DE-A1-102006 018 099
- US-A1- 2009 084 278

## Beschreibung

Die vorliegende Erfindung bezieht sich auf ein Verfahren zur Erzeugung von dreidimensionalen Mustern in Beschichtungen, die plättchenförmige Effektpigmente enthalten, auf die damit hergestellten Beschichtungen sowie die Verwendung von Produkten, die solche Beschichtungen aufweisen.

Dekorative dreidimensionale Beschichtungen, insbesondere auf haushaltsnahen Gebrauchsgütern wie Tapeten, Dekorationsfolien und Bodenbelägen, sind bekannt und bereits seit längerer Zeit im Einsatz. Sie verlei- hen den genannten Gütern ein exklusives Erscheinungsbild, das Tiefe suggeriert und sich in vorteilhafter Weise von üblichen Musterungen unterscheidet. Zu ihrer Herstellung werden teilweise auch plättchenförmige Effektpigmente verwendet. Häufig werden die Substrate und/oder die die Pigmente enthaltenden Schichten verprägt oder anderweitig strukturiert, um letztendlich ein dreidimensionales Muster aufzuweisen. Solche Strukturierungen sind aber häufig mit hohem apparativen Aufwand verbunden, da Prägewerkzeuge oder andere aufwändige Strukturierungsmaßnahmen in den Verfahrensablauf der Produktherstellung integriert werden müssen, was insbesondere dann mit Mühe und Kosten verbunden ist, wenn die strukturierte Schicht anschließend noch weiter beschichtet werden soll.

Ist die verprägte Schicht dagegen die oberste Schicht der Beschichtung, sind die oftmals tiefen Oberflächenstrukturen zwar eindeutig tastbar und damit besonders auffällig, andererseits sind die entstehenden Vertiefungen aber Umgebungseinflüssen wie Staub, anderen Verschmutzungen oder auch mechanischen Belastungen ausgesetzt, so dass das optische Erscheinungsbild im Laufe der Zeit an Qualität nachlässt.

So ist beispielsweise aus der US 4,675,212 ein Verfahren zur Herstellung dekorativer Beschichtungen bekannt, bei dem mehrere Schichten übereinander aufgebracht werden. Dabei kann das Aufbringen auch in Druckverfahren erfolgen. In der obersten Schicht werden dekorative Pigmente (Perlglanzpigmente, Metallpigmente) eingesetzt und als Muster aufgebracht. Um trotz der Herstellung von dreidimensionalen Mustern die eingesetzte Menge an diesen Pigmenten beschränken zu können, wird anschließend der gesamte Schichtverbund so verprägt, dass die dekorativen Pigmente auf den nicht verprägten Teilen der Oberfläche liegen, während die nicht mit Pigmenten bedruckten Teile der Oberfläche ein dreidimensionales Muster bilden. Auf diese Weise sind sowohl Perlglanz als auch ein Prägemuster erzielbar. Dabei wird der dreidimensionale Effekt allein durch die Prägung erzeugt, während die Effektpigmente parallel zur Oberfläche des Produktes orientiert bleiben. Ein auf diese Weise erzeugtes Produkt weist die bereits vorab geschilderten Nachteile bezüglich der äußeren Einflüsse auf die verprägte Oberfläche auf. Außerdem müssen spezielle Prägewerkzeuge eingesetzt werden um den gesamten Schichtenverbund mit einer Prägung versehen zu können.

Aus der GB 2 272 848 A ist eine dekorative Oberflächenbeschichtung bekannt, die auf einem Substrat eine Plastisol enthaltende Schicht umfasst, in der plättchenförmiges Material gleichmäßig verteilt vorliegt. Auf diese Schicht wird teilweise ein weiteres Plastisol aufgebracht, welches ausgehärtet und anschließend unter Einwirkung von Hitze und Druck in die das plättchenförmige Material enthaltende Schicht eingepresst wird. Auf diese Weise werden die in der darunter liegenden Schicht enthaltenen plättchenförmigen Pigmente aus ihrer parallelen Orientierung gelenkt und bilden ein räumliches Muster. Dieser Schichtverbund kann danach noch weiter beschichtet werden. Das Verfahren ist jedoch an die Verwendung von Plastisolen gebunden und erfordert die Einwirkung von Hitze und erhöhtem Druck, um die die plättchenförmigen Pigmente enthaltende Schicht zu verprägen. Außerdem erscheint es durch die Art der Verprägung unmöglich, präzise Muster mit feinen Strukturen herstellen zu können.

Des Weiteren sind auch Beschichtungen bekannt, die plättchenförmige magnetische Pigmente enthalten, wobei die magnetischen Pigmente durch Einwirkung eines magnetischen Feldes aus ihrer Orientierung gelenkt und auf diese Weise dreidimensionale Muster gebildet werden. Solche Magnetisierungseinheiten lassen sich gut beispielsweise in ein- oder mehrstufige Druckverfahren eingliedern, da die noch feuchten Druckschichten der Magneteinwirkung unterzogen werden. Allerdings sind für die Herstellung von Massenartikeln sehr hohe maschinelle Anforderungen zu erfüllen, insbesondere was die maschinelle Anpassung an die erforderliche Dauer der Orientierungszeit der Pigmente und die nachfolgenden Trocknungs- und Lagerungsprozesse betrifft.

In EP 428 933 B1 sind Materialien für den Sicherheitsdruck beschrieben, die eine Beschichtung aufweisen, die in unterschiedlichen Bereichen eine Strukturierung aufweist, die durch unterschiedlich orientierte plättchenförmige Pigmente hervorgerufen wird. Die eingesetzten Pigmente können auch magnetisch ausrichtbar sein. Die durch die strukturierte Beschichtung erhaltenen optischen Effekte sind nicht kopierbar und daher für Sicherheitsanwendungen gut geeignet. Allerdings ist im genannten Dokument kein industriell anwendbares Verfahren beschrieben, mit dessen Hilfe Massenartikel einfach hergestellt werden können.

WO 2008/031170 A1 offenbart ein Verfahren gemäß dem Oberbegriff von Anspruch 1.

Die Aufgabe der vorliegenden Erfindung besteht darin, ein Verfahren zur Erzeugung von dreidimensionalen Mustern in Beschichtungen zur Verfügung zu stellen, welches zur Herstellung von Massenartikeln problemlos einsetzbar ist, gut in bereits vorhandene Beschichtungsabläufe, insbesondere in Druckverfahren, integriert werden kann, keine Anordnungen zur magnetischen Ausrichtung von plättchenförmigen Pigmenten benötigt, gut sichtbare dreidimensionale Muster erzeugt ohne die beschichtete Oberfläche deutlich zu verprägen, und das bei Beschichtungen angewandt werden kann, die nahezu alle bekannten Arten von plättchenförmigen Effektpigmenten enthalten können.

Eine weitere Aufgabe der vorliegenden Erfindung besteht darin, eine Beschichtung zur Verfügung zu stellen, die plättchenförmige Effektpigmente der verschiedensten Art enthalten kann und ein gut sichtbares, aber nicht taktil erfassbares, dreidimensional erscheinendes Muster aufweist. Weiterhin besteht die Aufgabe der Erfindung darin, ein Produkt zur Verfügung zu stellen, welches auf einer Oberfläche, die aus vielfältigen Materialien bestehen kann, eine Beschichtung aufweist, die ihrerseits ein dreidimensional erscheinendes Muster aufweist.

Eine weitere Aufgabe der vorliegenden Erfindung besteht darin, die Verwendung der beschriebenen Produkte aufzuzeigen.

Die Aufgabe der vorliegenden Erfindung wird durch ein Verfahren zur Erzeugung von dreidimensionalen Mustern in Beschichtungen gelöst, bei dem eine fliessfähige Beschichtungszusammensetzung unter Bildung einer ersten Schicht auf ein Substrat aufgebracht und die erste Schicht in einem nicht verfestigten Zustand mit einem Werkzeug, welches eine Oberfläche mit Erhebungen aufweist, derart in Kontakt gebracht wird, dass die Erhebungen des Werkzeugs Vertiefungen in der ersten Schicht erzeugen, das Werkzeug entfernt wird, und optional die erste, Vertiefungen enthaltende Schicht mit einer zweiten Beschichtungszusammensetzung unter Bildung einer zweiten Schicht beschichtet wird, wobei mindestens eine der Beschichtungszusammensetzungen plättchenförmige Effektpigmente enthält, das Werkzeug eine Druckform für ein Hochdruckverfahren ist, die Vertiefungen in der ersten Schicht nicht tiefer als 10 µm sind, und die Schicht(en) verfestigt wird (werden).

Die Aufgabe der vorliegenden Erfindung wird auch gelöst durch eine Beschichtung auf einem Substrat, welche ein dreidimensionales Muster aufweist und aus einer ersten, und optional einer zweiten, verfestigten Schicht besteht, wobei mindestens eine der Schichten plättchenförmige Effektpigmente enthält und wobei die erste Schicht Vertiefungen aufweist, die nicht tiefer als 10 µm sind, wobei die Beschichtung nach dem oben beschriebenen Verfahren erhältlich ist.

Des Weiteren wird die Aufgabe der Erfindung gelöst durch ein Produkt, welches eine Oberfläche aufweist, die ein nach dem oben beschriebenen Verfahren erzeugtes dreidimensionales Muster in einer Beschichtung auf einem Substrat aus Papier, einer Kartonage, einer Tapete, einem Laminat, einem Tissue-Material, Holz, einem Polymer, einem Metall, einer polymeren Folie, einer Metallfolie, einem Sicherheitsdruckerzeugnis oder aus einem Material aufweist, welches Bestandteile aus mehreren dieser Stoffe enthält, und wobei das Substrat optional elektrostatisch vorbehandelt und/oder mit einer Primerschicht und/oder einer anderen Grundierschicht versehen ist.

Die Aufgabe der vorliegenden Erfindung wird außerdem auch durch die Verwendung des vorab beschriebenen Produktes als Dekorationsmaterial oder Sicherheitserzeugnis gelöst.

Das erfindungsgemäße Verfahren dient der Erzeugung von dreidimensionalen Mustern in Beschichtungen, die plättchenförmige Effektpigmente enthalten. Gegenstand der vorliegenden Erfindung ist daher ein Verfahren zur Erzeugung solcher dreidimensionaler Muster.

Dabei wird ein übliches Substrat, wie es weiter unten näher beschrieben wird, mit einer fliessfähigen Beschichtungszusammensetzung versehen.

Der Grad der Fluidität der Beschichtungszusammensetzung ist dabei durch die Art des Auftragsverfahrens bestimmt. Wie allgemein bekannt ist, sind verschiedene übliche Aufragsverfahren viskositätsabhängig, so dass die Viskosität einer Beschichtungszusammensetzung je nach Art des Auftragsverfahrens und der dazu gehörigen Apparaturen eingestellt werden muss. Diese Einstellung ist dem Fachmann jedoch geläufig und erfordert kein erfinderisches Zutun. Die Viskosität einer Beschichtungszusammensetzung verhält sich dabei umgekehrt proportional zu ihrer Fluidität. Wenn eine dünnflüssige fliessfähige Beschichtungszusammensetzung auf dem Substrat aufgebracht ist, erhöht sich bei dem nunmehr einsetzenden Trocknungs- bzw. Verfestigungsvorgang die Viskosität so lange, bis nach einiger Zeit eine hochviskose, also noch fliessfähige und damit auch noch formbare, Beschichtung entsteht, die nachfolgend in eine feste bzw. verfestigte, also trockene und nicht mehr fliessfähige Beschichtung übergeht. Bei hochviskosen Beschichtungszusammensetzungen entfällt der erste Verfestigungsschritt, die Beschichtungszusammensetzung verbleibt, abhängig von den eingesetzten Materialien, nur relativ kurze Zeit in einem formbaren Zustand. Abhängig vom eingesetzten Trocknungs- oder Verfestigungsverfahren (Wärmezufuhr, Härtungsbeschleuniger, UV-Trocknung, oxidative Trocknung) kann der gesamte Verfestigungs- und Trocknungsvorgang auch innerhalb sehr kurzer Zeitspannen (Zehntelsekunden) ablaufen.

Im Verfahren gemäß der vorliegenden Erfindung wird nun eine Beschichtung, die sich auf einem Substrat in einem (noch) nicht verfestigten, also noch fliessfähigen und formbaren, aber in der Regel nicht oder nicht mehr niedrig viskosen, dünnflüssigen Zustand, befindet, mit einem Werkzeug in Kontakt gebracht, welches auf seiner Oberfläche Erhebungen aufweist, wobei es sich erfindungsgemäß bei diesem Werkzeug um eine Druckform für ein Hochdruckverfahren handelt. Die Gesamtheit der Erhebungen (zweidimensionale Formgebung) auf der Oberfläche der Druckform, und zwar auf dem Teil der Oberfläche der Druckform, der mit der ersten Schicht in Kontakt gebracht wird, stellt das zu übertragende Muster (zweidimensionale Formgebung) in spiegelbildlicher Form dar. Dies entspricht insofern weitestgehend der Art, wie allgemein mit Hochdruckformen Muster auf ein Substrat übertragen werden, siehe die nachfolgende Erläuterung.

Die Oberfläche von Hochdruckformen weist gewöhnlich Erhebungen auf, die sich auf demselben Höhenniveau befinden und deren nach außen weisende Oberfläche mit einer Druckfarbe bedeckt wird, welche anschließend auf einen zu bedruckenden Bedruckstoff übertragen wird. Damit entsteht auf dem Bedruckstoff das Spiegelbild der Oberfläche der Erhebungen auf der Oberfläche der Druckform.

Als Hochdruckformen für das erfindungsgemäße Verfahren sind die in den üblichen Hochdruckverfahren wie Buchdruck, Lettersetdruck und Flexodruck verwendeten Druckformen geeignet, wobei Flexodruckformen u.a. wegen ihrer Flexibilität bevorzugt sind. Bei den verwendeten Druckformen handelt es sich gewöhnlich um Druckplatten oder Druckzylinder.

Im Gegensatz zu einem gewöhnlichen Hochdruckverfahren wird beim Kontakt der Druckform mit der Oberfläche eines zu bedruckenden Stoffes im erfindungsgemäßen Verfahren keine Druckfarbe übertragen. Auch der Bedruckstoff stellt nicht ein übliches Medium wie Papier, Karton, Polymerfolie oder dergleichen dar, sondern ein mit einer fliessfähigen und noch nicht getrockneten oder anderweitig verfestigten Schicht (vorzugsweise frisch) beschichtetes Substrat, wobei die Erhebungen auf der Hochdruckform in diese (erste) Schicht erfindungsgemäß bis zu einer Tiefe von 10 µm eindringen. Das entspricht dem Prinzip einer, wenn auch geringfügigen, Nassverprägung der ersten Schicht, ohne dass dabei das Substrat ebenfalls verprägt wird. Anschließend wird die Druckform entfernt. Da die erste Schicht sich zwar noch in einem fliessfähigen, aber vorzugsweise nicht mehr niedrig viskosen Zustand befindet, bleibt das so erzeugte Muster, bei dem es sich im Gegensatz zum bei üblichen Hochdruckverfahren übertragenen zweidimensionalen Mustern um ein dreidimensionales Muster (Form der Oberfläche der Erhebungen mit einer Eindringtiefe bis zu 10 µm) handelt, in der Schicht erhalten, bevor diese endgültig verfestigt wird. Alternativ kann auch eine niedrig viskose Beschichtungszusammensetzung durch den Kontakt mit den Erhebungen einer Hochdruckform verformt und unmittelbar danach verfestigt werden (beispielsweise durch UV- oder Elektronenstrahlhärtung), wenn die Dicke der aufgebrachten Schicht ausreichend dünn ist um sofort nach dem Entfernen der Hochdruckform durchgehärtet werden zu können.

Erfindungsgemäß sind die Vertiefungen in der noch nicht verfestigten ersten Schicht nicht tiefer als 10 µm, vorzugsweise nicht tiefer als 5 µm. Diese Vertiefungen können beim Verfestigen der ersten Schicht durch geringfügiges Verlaufen der eingeprägten Konturen der Erhebungen der Druckform noch etwas abgeflacht werden, also in der verfestigten ersten Schicht eine geringere Tiefe als 10 µm aufweisen. Da erfindungsgemäß Hochdruckformen zur Erzeugung der Vertiefungen in der ersten Schicht verwendet werden, ist die Tiefe aller Vertiefungen in der ersten Schicht praktisch gleich. Damit ist gewährleistet, dass die Sichtbarkeit des dreidimensionalen Musters an jeder beliebigen Stelle der mustertragenden Beschichtung gleichermaßen gut gewährleistet ist und dass es keine tiefen Verprägungen in der ersten Schicht gibt, die bei nachfolgendem Gebrauch der beschichteten Produkte ein Ansammeln von Verschmutzungen in diesen Verprägungen begünstigen würden.

Die Tiefe der Vertiefungen in der ersten verfestigten Schicht beträgt von 1 bis 10 µm, vorzugsweise von 1 bis 5 µm, insbesondere von 1 bis 3 µm. Derartige Vertiefungen sind so geringfügig, dass sie vom Menschen taktil nicht erfasst werden können, also beim Berühren bzw. Überfahren der erfindungsgemäß verprägten ersten Schicht mit einem menschlichen Körperteil, vorzugsweise einem Finger oder einer Hand, nicht als Verprägungen erfühlt werden können.

Das Verfestigen der ersten, die Vertiefungen aufweisenden Schicht erfolgt durch die üblichen Verfahren wie Trocknen und/oder Härten, abhängig von der Art der eingesetzten Bindemittelsysteme. Dabei kann der Trocknungs- und/oder Härtungsprozess wie üblich durch die Zufuhr von Wärme, Luft oder Schutzgasen und/oder die Belichtung mit Licht verschiedener Wellenlängen, besonders bevorzugt mit UV-Stahlung, unterstützt werden. Ist nur eine erste Schicht vorhanden, erfolgt das Verfestigen dieser Schicht vorzugsweise unmittelbar nach dem Einbringen der Vertiefungen in die Schicht. Soll noch eine zweite Schicht auf der ersten Schicht aufgebracht werden, kann das Verfestigen der ersten Schicht vor dem Aufbringen der zweiten Schicht, aber auch gleichzeitig mit der bereits aufgebrachten zweiten Schicht erfolgen. Dabei wird das bevorzugte Verfahren in Abhängigkeit von der bereits vorhandenen mechanischen Festigkeit der Vertiefungen in der ersten Schicht wie auch vom gewünschten Auftragsverfahren für die zweite Schicht ausgewählt. Im allgemeinen ist es jedoch vorteilhaft, wenn die erste Schicht verfestigt wird, bevor die zweite Beschichtungszusammensetzung aufgebracht wird.

Die erste Schicht im erfindungsgemäßen Verfahren weist eine Dicke (Nassdicke) von 1 bis etwa 40 µm auf, vorzugsweise von 2 bis 30 µm und insbesondere von 2 bis 15 µm. Dabei ist es selbstverständlich, dass die Nassdicke der ersten Schicht nicht geringer ist als die erfindungsgemäß erzeugten Vertiefungen in der ersten noch unverfestigten Schicht. Im äußersten Fall entspricht die Nassschichtdicke der ersten Schicht der Tiefe der Vertiefungen in ebendieser ersten Schicht. Gewöhnlich ist aber die Nassdicke der ersten Schicht größer als die Tiefe der Vertiefungen in dieser Schicht. Dasselbe trifft jeweils auch auf die Trockenschichtdicke der ersten Schicht im Verhältnis zu den Vertiefungen in der verfestigten ersten Schicht zu.

Es liegt auf der Hand, dass die Nassschichtdicke der ersten Schicht in maßgeblichem Umfang von dem Verfahren bestimmt wird, mit dem diese Schicht auf das zu beschichtende Substrat aufgebracht wird.

Als Beschichtungsverfahren zum Aufbringen der ersten Schicht kommen dabei alle fachüblichen Beschichtungsverfahren in Frage, die eine feuchte, formbare Beschichtung mit ausreichender Nassschichtdicke auf einem zu beschichtenden Substrat erzeugen. Zu diesem Zwecke können übliche Beschichtungs-, aber auch Druckverfahren vorteilhaft eingesetzt werden.

Vorzugsweise handelt es sich um Druckverfahren, beispielsweise um ein Tiefdruckverfahren, ein Siebdruckverfahren, ein Papier-BeschichtungsVerfahren, ein Flexodruck-Verfahren, ein Tampondruckverfahren, ein Offsetdruckverfahren oder ein Offsetüberdrucklackierungsverfahren.

Es können jedoch auch ebenfalls gebräuchliche Beschichtungsverfahren wie ein Lackierverfahren, ein Spritzlackierverfahren (Air Brush, Sprühen), ein Coil-Coating-Verfahren oder ein Reverse-Roll-Coating-Verfahren, eingesetzt werden.

Besonders bevorzugt für das Aufbringen der ersten Schicht ist ein Flexodruckverfahren oder ein Offsetüberdrucklackierungsverfahren.

Das Auftragen der ersten Schicht auf das zu beschichtende Substrat erfolgt vollflächig, zumindest in dem Bereich, der mit dem dreidimensionalen Muster gemäß der vorliegenden Erfindung versehen werden soll. Dieser Bereich kann selbstverständlich auch nur einen Teilbereich der gesamten Oberfläche eines Substrates darstellen, wenn nur Teile der Oberfläche des Substrates mit einem erfindungsgemäß erzeugten dreidimensionalen Muster versehen werden sollen.

Als Substrate sind alle üblichen Materialien geeignet, die gewöhnlich als Basis- bzw. Trägermaterialien für dekorative und Sicherheitsprodukte eingesetzt werden. Demzufolge ist das erfindungsgemäß eingesetzte Substrat vorzugsweise ein Papier, eine Kartonage, eine Tapete, ein Laminat, ein Tissue-Material, Holz, ein Polymer, insbesondere eine polymere Folie, ein Metall, insbesondere eine Metallfolie, ein Sicherheitsdruckerzeugnis oder ein Material, welches Bestandteile aus mehreren dieser Stoffe enthält. Wie allgemein insbesondere bei Papieren und Polymerfolien üblich, kann das Substrat optional auch noch elektrostatisch vorbehandelt und/oder mit einer Primerschicht und/oder einer anderen Grundierschicht versehen sein. Solche Maßnahmen sind dem Fachmann allgemein bekannt und fachüblich und bedürfen daher keiner näheren Erläuterung.

Optional kann die erste Schicht noch mit einer zweiten Beschichtungszusammensetzung beschichtet werden, die anschließend, sofern erforderlich, verfestigt wird. Auf diese Weise wird eine zweite Schicht auf der ersten Schicht ausgebildet. Als Verfahren für das Aufbringen der zweiten Schicht sind die vorab bereits beschriebenen Druck- und Beschichtungsverfahren geeignet. Zusätzlich kann aber auch ein so genanntes Bronzierverfahren eingesetzt werden. Dabei wird üblicherweise ein Effektpigmentpulver auf eine noch feuchte Bindemittelschicht direkt aufgetragen, also aufgestäubt, gesprüht, gewischt, oder dergleichen. Wird dieses Verfahren für das Aufbringen einer erfindungsgemäßen zweiten Schicht ausgewählt, stehen prinzipiell zwei Varianten zur Verfügung. In einer ersten Variante kann die noch feuchte, also noch nicht vollständig verfestigte erste Schicht als Grundlage für die direkte Aufbringung von Effektpigmenten dienen, das Bindemittelsystem der ersten Schicht bildet also die Grundlage für die pur aufgebrachten Effektpigmente der zweiten Schicht. In diesem Falle besteht die zweite Schicht praktisch ausschließlich aus plättchenförmigen Effektpigmenten. In einer zweiten Variante wird als zweite Schicht zunächst ein Bindemittelsystem auf die bereits verfestigte erste Schicht aufgebracht und dieses nachfolgend wie oben beschrieben im noch nicht getrockneten oder verfestigten Zustand mit einem Effektpigmentpulver beschichtet. In diesem Falle ist die zweite Schicht ihrerseits zweiteilig ausgebildet. Beim sich anschließenden Trocknungs- bzw. Verfestigungsvorgang bleiben die lose auf die Oberfläche aufgebrachten Effektpigmente zum großen Teil auf der bindemittelbehafteten Fläche haften. Der Pigmentüberschuss wird nach dem Verfestigen der Schicht vorzugsweise mechanisch entfernt.

Mindestens eine der Beschichtungszusammensetzungen, und damit auch die erste und/oder die zweite Schicht, enthält plättchenförmige Effektpigmente. Dies soll ebenso für den oben beschriebenen Fall der zweiteiligen Ausbildung der zweiten Schicht gelten, bei dem nur der obere Teil der zweiteiligen Schicht plättchenförmige Effektpigmente enthält bzw. aus diesen besteht. Obwohl das erfindungsgemäße Verfahren zur Erzeugung dreidimensionaler Muster in Beschichtungen unabhängig davon, welche der beiden Schichten (erste, zweite, oder beide Schicht(en) der Beschichtung) die plättchenförmigen Effektpigmente enthält, gleichermaßen gute optische Effekte erzielt, ist ein Verfahren bevorzugt, bei dem die erste Schicht die plättchenförmigen Effektpigmente enthält und, insbesondere, ein Verfahren bei dem lediglich diese erste Schicht aufgebracht wird. Das erstere dieser beiden letztgenannten Verfahren bietet die Möglichkeit, auf die bereits ein optisch wahrnehmbares dreidimensionales Muster aufweisende erste Schicht eine Schutzschicht aufzubringen, die keine plättchenförmigen Effektpigmente enthält, während das letztere Verfahren durch die Einsparung eines zweiten Beschichtungsvorganges wirtschaftlicher durchführbar ist.

Bei den üblichen, oben bereits teilweise aufgeführten Beschichtungsverfahren werden plättchenförmige Effektpigmente, die sich in der jeweiligen Beschichtungszusammensetzung befinden, in der Regel allein schon durch die beim Beschichtungsprozess wirkenden horizontalen Kräfte und bedingt durch ihre Plättchenform praktisch parallel zur beschichteten Oberfläche orientiert, um den horizontalen Strömungen während des Beschichtungsprozesses einen möglichst geringen Widerstand entgegen zu setzen. Aus diesem Grunde kann man davon ausgehen, dass in frisch aufgebrachten bindemittelhaltigen und ggf. lösemittelhaltigen Beschichtungen, die mit den üblichen Beschichtungstechnologien auf üblichen, praktisch ebenen Substraten aufgebracht werden und plättchenförmige Effektpigmente enthalten, letztere üblicherweise weitestgehend parallel zur Oberfläche des Substrates ausgerichtet in der noch unverfestigten Beschichtung vorliegen.

Die noch unverfestigte erste Schicht im erfindungsgemäßen Verfahren enthält also, für den Fall, dass plättchenförmige Effektpigmente enthalten sind, diese in weitestgehend paralleler Ausrichtung zum üblicherweise ebenen Substrat. Durch den Kontakt mit der Druckform für ein Hochdruckverfahren wird zumindest die Oberfläche der ersten Beschichtung bis zu einer Tiefe von 10 µm an den Kontaktstellen verformt, es entstehen Vertiefungen. An diesen Kontaktstellen werden die in der ersten Beschichtungszusammensetzung gegebenenfalls vorhandenen plättchenförmigen Effektpigmente aus ihrer parallelen Ausrichtung gelenkt und nehmen, je nach ihrer Lage innerhalb der Kontaktstelle, eine Ausrichtung an, die eine gewisse Neigung zur Oberfläche des beschichteten Substrates aufweist, also beispielsweise schräg oder auch senkrecht zu dieser gelagert ist. Die plättchenförmigen Effektpigmente, die sich außerhalb der Kontaktstellen der Druckform mit der Beschichtung in letzterer befinden, behalten dagegen ihre parallele Ausrichtung bei. Auf diese Weise wird der dreidimensionale Abdruck, der durch die Erhebungen auf der Oberfläche des Hochdruckwerkzeugs in der ersten Beschichtung hinterlassen wird, durch die dort ggf. vorhandenen plättchenförmigen Effektpigmente repliziert, so dass ein dreidimensionales Muster aus plättchenförmigen Effektpigmenten, welches im weiteren Sinne dem Spiegelbild des Musters entspricht, das durch die Erhebungen auf der Druckform in die erste Schicht geprägt wird, entsteht. Je nach Art der plättchenförmigen Effektpigmente erscheint dieses dreidimensionale Muster in der verfestigten ersten Schicht dann farbig, glänzend und/oder metallisch. Im weitesten Sinne wird dadurch dass in die Oberfläche der ersten Schicht "eingeprägte" dreidimensionale Muster, welches taktil nicht erfassbar ist, durch die Auslenkung der plättchenförmigen Effektpigmente in dieser Schicht erst sichtbar und damit wahrnehmbar gemacht. Es hat sich dabei überraschenderweise herausgestellt, dass bereits eine äußerst geringe "Verprägung" der ersten Schicht ausreicht um erhebliche optisch erfassbare Änderungen in der Ausrichtung der Pigmente in der Beschichtung hervorzurufen. Das sichtbare dreidimensionale Muster in der Beschichtung tritt also deutlich stärker in Erscheinung, als es sich nach der geringen Formänderung an der Oberfläche der ersten Schicht erwarten ließe.

Unter "weitestgehend paralleler Ausrichtung" im Sinne der vorliegenden Erfindung wird sowohl eine geometrisch parallele Ausrichtung der Effektpigmente zur Oberfläche des zu beschichtenden Substrates (und der Oberfläche der ersten Schicht) verstanden als auch eine Ausrichtung mit Abweichungen davon bis zu einem Winkel von etwa 10 Grad, da die technisch erzielbare Ausrichtung von Effektpigmenten in Beschichtungsverfahren oft nicht einer streng geometrisch parallelen Ausrichtung entspricht. Im Folgenden wird jedoch für "weitestgehend parallel" allgemein der Ausdruck "parallel" verwendet.

Optional kann auf der ersten, verfestigten Schicht noch eine zweite Beschichtungszusammensetzung aufgebracht werden, die zusätzlich oder alternativ zur ersten Beschichtungszusammensetzung ebenfalls plättchenförmige Effektpigmente enthalten kann. Die dadurch gebildete zweite Schicht wird erfindungsgemäß nicht auf ein ebenes Substrat aufgebracht, sondern auf die bereits vorgeformte bzw. deformierte erste Schicht. Für den Fall, dass sich in der zweiten Beschichtungszusammensetzung plättchenförmige Effektpigmente befinden, orientieren diese sich durch das Beschichtungsverfahren ebenfalls parallel zur beschichteten Oberfläche, d.h. an den durch die Erhebungen der Druckform erzeugten Vertiefungen in der ersten Schicht demzufolge in zur ersten Schicht hin geneigter Form, an allen nicht verformten Stellen der Oberfläche der ersten Schicht parallel zu dieser Oberfläche. Auf diese Weise kann ein sichtbares dreidimensionales Muster mittels der in der zweiten Schicht befindlichen plättchenförmigen Effektpigmente erzeugt und/oder das dreidimensionale Muster aus der ersten Schicht verstärkt oder durch zusätzliche optische oder funktionelle Effekte ergänzt werden.

Im Gegensatz zur ersten Schicht unterliegt die Schichtdicke der zweiten Schicht praktisch keinen Begrenzungen, solange die Sichtbarkeit des dreidimensionalen Musters aus einer oder beiden Schichten erhalten bleibt. Die Schichtdicke der zweiten Schicht muss daher noch nicht einmal so groß sein, dass die durch den Kontakt mit den Erhebungen der Druckform erzeugten Vertiefungen in der ersten Schicht ausgefüllt werden, so dass eine ebene Oberfläche entsteht. Das bedeutet, dass die Schichtdicke (trocken) der zweiten Schicht durchaus geringer als 10 µm sein kann, beispielsweise ab 1 µm oder 2 µm. In diesem Falle wird die der ersten Schicht abgewandte Oberfläche der zweiten Schicht nicht eben sein, sondern ebenfalls Vertiefungen aufweisen. Diese sind maximal 10 µm tief, vorzugsweise jedoch weniger als 10 µm. Ein solcher Fall tritt beispielsweise ein, wenn das oben beschriebene Bronzierverfahren für das Aufbringen der zweiten Schicht gewählt wird und die zweite Schicht selbst zweiteilig ist, also plättchenförmige Effektpigmente nur im oberen Teil der Schicht enthält. Es ist jedoch vorteilhaft, weil einfacher durchführbar, wenn die zweite Schicht die in der ersten Schicht enthaltenen Vertiefungen ausfüllt und darüber hinaus die gesamte Oberfläche der ersten Schicht bedeckt, d.h. größer ist als die Tiefe der Vertiefungen in der ersten Schicht. Die erzielbaren Schichtdicken werden durch das Auftragsverfahren bestimmt und sind daher in der Regel lediglich aus technischen Gründen limitiert.

Als Auftragsverfahren für die zweite Schicht stehen, wie vorab bereits erwähnt, prinzipiell alle Verfahren zur Verfügung, die bereits oben für das Aufbringen der ersten Schicht beschrieben wurden. Zusätzlich dazu sind jedoch auch Verfahren wie Pulverlackierung oder das bereits beschriebene Bronzierverfahren geeignet, bei denen keine fliessfähigen, sondern feste Beschichtungszusammensetzungen aufgebracht werden, da die zweite Schicht nicht zwangsläufig einen unverfestigten, noch formbaren Zwischenzustand aufweisen muss. Vielmehr können auch bei der Pulverlackierung oder bei einem Bronzierverfahren aufgebrachte plättchenförmige Effektpigmente die durch die Verformungen in der verfestigten ersten Schicht vorgegebene Orientierung annehmen. Solche Schichten können sehr dünn, also mit wenigen Mikrometern Dicke, aufgebracht werden.

Bevorzugt wird für das Aufbringen der zweiten Schicht jedoch ebenfalls ein Flexodruckverfahren oder ein Offsetüberdrucklackierungsverfahren eingesetzt.

Das Aufbringen der zweiten Beschichtungszusammensetzung auf die, vorzugsweise bereits verfestigte, erste Schicht kann, abhängig vom gewünschten Ergebnis, vollflächig oder teilflächig erfolgen.

Als plättchenförmige Effektpigmente im Verfahren gemäß der vorliegenden Erfindung können alle bekannten plättchenförmigen Effektpigmente eingesetzt werden, solange diese in der jeweiligen verfestigten Schicht sichtbar sind. Solche plättchenförmigen Effektpigmente werden vorteilhafterweise ausgewählt aus der Gruppe Perlglanzpigmente, Interferenzpigmente, Metalleffektpigmente, Flüssigkristallpigmente (Liquid Crystal Pigments), plättchenförmige funktionelle Pigmente, plättchenförmige strukturierte Pigmente, oder einem Gemisch aus diesen. Diese Effektpigmente sind aus einer oder mehreren Schichten aus gegebenenfalls unterschiedlichen Materialien aufgebaut und liegen plättchenförmig vor.

Bevorzugt weisen diese Pigmente einen plättchenförmigen Träger auf, welcher optional mindestens eine Beschichtung aus einem Metall, Metalloxid, Metalloxidhydrat oder deren Gemischen, einem Metallmischoxid, - suboxid, -oxinitrid, Metallfluorid oder einem Polymer umfasst.

Perlglanzpigmente bestehen aus transparenten Plättchen mit hoher Brechzahl und zeigen bei paralleler Orientierung durch Mehrfachreflexion einen charakteristischen Perlglanz. Solche Perlglanzpigmente, die zusätzlich auch Interferenzfarben zeigen, werden als Interferenzpigmente bezeichnet.

Obwohl natürlich auch klassische Perlglanzpigmente wie TiO₂-Plättchen, basisches Bleicarbonat, BiOCI-Pigmente oder Fischsilberpigmente prinzipiell geeignet sind, werden als Effektpigmente im Sinne der Erfindung vorzugsweise plättchenförmige Interferenzpigmente oder Metalleffektpigmente eingesetzt, welche auf einem plättchenförmigen Träger mindestens eine Beschichtung aus einem Metall, Metalloxid, Metalloxidhydrat oder deren Gemischen, einem Metallmischoxid, Metallsuboxid, Metalloxinitrid, Metallfluorid oder einem Polymer aufweisen.

Die Metalleffektpigmente weisen bevorzugt mindestens einen Metallträger oder eine Metallschicht auf.

Der plättchenförmige Träger besteht vorzugsweise aus natürlichem oder synthetischem Glimmer, Kaolin oder einem anderen Schichtsilikat, aus Glas, Calcium-Aluminium-Borosilikat, SiO₂, TiO₂, Al₂O₃, Fe₂O₃, Polymerplättchen, Graphitplättchen oder aus Metallplättchen, wie beispielsweise aus Aluminium, Titan, Bronze, Silber, Kupfer, Gold, Stahl oder diversen Metalllegierungen.

Besonders bevorzugt sind plättchenförmige Träger aus Glimmer, Glas, Calcium-Aluminium-Borosilikat, Graphit, SiO₂, Al₂O₃, oder aus Aluminium.

Die Größe des plättchenförmigen Trägers ist an sich nicht kritisch. Die Träger weisen in der Regel eine Dicke zwischen 0,01 und 5 µm, insbesondere zwischen 0,05 und 4,5 µm und besonders bevorzugt von 0,1 bis 1 µm auf. Die Ausdehnung in der Länge bzw. Breite beträgt üblicherweise von 1 bis 500 µm, vorzugsweise von 1 bis 200 µm und insbesondere von 5 bis 125 µm. Sie besitzen in der Regel ein Aspektverhältnis (Verhältnis des mittleren Durchmessers zur mittleren Teilchendicke) von 2:1 bis 25000:1, vorzugsweise von 3:1 bis 1000:1 und insbesondere von 6:1 bis 250:1.

Die genannten Maße für die plättchenförmigen Träger gelten prinzipiell auch für die erfindungsgemäß verwendeten beschichteten Effektpigmente, da die zusätzlichen Beschichtungen in der Regel im Bereich von nur wenigen Hundert Nanometern liegen und damit die Dicke oder Länge bzw. Breite (Teilchengröße) der Pigmente nicht wesentlich beeinflussen.

Bevorzugt besteht eine auf dem Träger aufgebrachte Beschichtung aus Metallen, Metalloxiden, Metallmischoxiden, Metallsuboxiden oder Metallfluoriden und insbesondere aus einem farblosen oder farbigen Metalloxid, ausgewählt aus TiO₂, Titansuboxiden, Titanoxinitriden, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemischen.

Beschichtungen aus Metallen sind vorzugsweise aus Aluminium, Titan, Chrom, Nickel, Silber, Zink, Molybdän, Tantal, Wolfram, Palladium, Kupfer, Gold, Platin oder diese enthaltenden Legierungen.

Als Metallfluorid wird bevorzugt MgF₂ eingesetzt.

Besonders bevorzugt sind Effektpigmente, welche einen plättchenförmigen Träger aus Glimmer, Glas, Calcium-Aluminium-Borosilikat, Graphit, SiO₂, Al₂O₃, oder aus Aluminium und mindestens eine Beschichtung auf dem Träger aufweisen, welche aus TiO₂, Titansuboxiden, Titanoxinitriden, Fe₂O₃, Fe₃O₄, SnO₂, Sb₂O₃, SiO₂, Al₂O₃, MgF₂, ZrO₂, B₂O₃, Cr₂O₃, ZnO, CuO, NiO oder deren Gemischen ausgewählt ist.

Die Effektpigmente können einen Mehrschichtaufbau aufweisen, bei dem sich auf einem metallischen oder nichtmetallischen Träger mehrere Schichten übereinander befinden, die vorzugsweise aus den vorab genannten Materialien bestehen und verschiedene Brechzahlen in der Art aufweisen, dass sich jeweils mindestens zwei Schichten unterschiedlicher Brechzahl abwechselnd auf dem Träger befinden, wobei sich die Brechzahlen in den einzelnen Schichten um wenigstens 0,1 und bevorzugt um wenigstens 0,3 voneinander unterscheiden. Dabei können die auf dem Träger befindlichen Schichten sowohl farblos als auch farbig, überwiegend transparent, semitransparent oder auch opak sein.

Je nach verwendetem Trägermaterial und Art der aufgebrachten Schichten sind damit auch die erhaltenen Effektpigmente farblos oder weisen eine Körperfarbe auf, bzw. sind überwiegend transparent, semitransparent oder opak. Durch das Ein- oder Mehrschichtsystem auf dem Träger sind sie aber zusätzlich in der Lage, mehr oder weniger intensive und glänzende Interferenzfarben zu erzeugen.

Ebenso können die sogenannten LCPs (Liquid Crystal Pigments), die aus vernetzten, orientierten, cholesterischen Flüssigkristallen bestehen, oder aber auch als holographische Pigmente bezeichnete Polymer- oder Metallplättchen als Effektpigmente eingesetzt werden.

Die vorab beschriebenen Effektpigmente können in den erfindungsgemäß eingesetzten Beschichtungszusammensetzungen einzeln oder als Gemisch von zwei oder mehreren vorhanden sein. Ebenso können sie im Gemisch mit organischen und/oder anorganischen Farbstoffen oder Farbpigmenten und/oder auch in Gemischen mit unbeschichtetem Glimmer eingesetzt werden. Dabei beträgt der Gewichtsanteil der plättchenförmigen Effektpigmente in der jeweiligen, bindemittelhaltigen Beschichtungszusammensetzung im allgemeinen zwischen 1 und 35 Gewichtsprozent und vorzugsweise zwischen 5 und 25 Gewichtsprozent, bezogen auf das Gesamtgewicht der Beschichtungszusammensetzung.

Als Effektpigmente können beispielsweise die im Handel erhältlichen funktionellen Pigmente, Interferenzpigmente oder Perlglanzpigmente, welche unter den Bezeichnungen Iriodin®, Colorstream®, Xirallic®, Miraval®, Ronastar®, Biflair®, Minatec®, Lustrepak®, Colorcrypt®, Colorcode® und Securalic® von der Firma Merck KGaA angeboten werden, Mearlin® der Firma Mearl, Metalleffektpigmente der Firma Eckart sowie optisch variable Effektpigmente wie beispielsweise Variochrom® der Firma BASF, Chromafflair® der Firma Flex Products Inc., Helicone® der Firma Wacker, holographische Pigmente der Firma Spectratec sowie andere kommerziell erhältliche Effektpigmente eingesetzt werden.

Für den Erfolg der vorliegenden Erfindung sind die einzelnen Farb- und/oder Glanzeffekte, die durch die Effektpigmente erzielt werden können, an sich nicht ausschlaggebend. Vielmehr wird der erfindungsgemäße Erfolg durch die Veränderung des optisch wahrnehmbaren Effektes der plättchenförmigen Effektpigmente an den Stellen der Beschichtung erzielt, die mit den Erhebungen der Hochdruckform gemäß des erfindungsgemäßen Verfahren in Kontakt kommen und dadurch aus ihrer zur Oberfläche des Substrates parallelen Ausrichtung gelenkt werden. Dabei wird ein dreidimensionales Muster in der Beschichtung erzeugt und über die durch die Effektpigmente sichtbar gemachten optischen Effekte wahrnehmbar. Das sichtbare dreidimensionale Muster ist dabei deutlich ausgeprägter als es die reale Verformung der Beschichtung erwarten ließe, weil eine Auslenkung der plättchenförmigen Effektpigmente aus der parallelen Lage auch um nur wenige Winkelgrade bereits eine deutliche Änderung ihrer Reflexionseigenschaften zur Folge hat.

Selbstverständlich werden aber bevorzugt Effektpigmente eingesetzt, mit denen optisch sehr ansprechende Druckergebnisse erzielt werden können, die mit klassischen organischen oder anorganischen Farbstoffen oder Farbpigmenten allein nicht erhalten werden können. So sind gerade im Verpackungsdruck glänzende intensive Interferenzfarben, Metallic-Effekte oder Druckbilder, die beim Abkippen ein Farbspiel und/oder eindrucksvolle Hell/Dunkel-Effekte zeigen (optisch variable Drucke), sehr begehrt. Dabei ist oft der Glitzereffekt der Druckbilder um so größer, je größer die Teilchengröße der Effektpigmente ist. Solche Farb- und Glanzeindrücke lassen sich nur mit plättchenförmigen Effektpigmenten erzielen.

Zeigen die eingesetzten plättchenförmigen Effektpigmente ein optisch variables Verhalten, ist dieses selbstverständlich in der erfindungsgemäß hergestellten gemusterten Beschichtung nicht nur dann wahrnehmbar, wenn der Betrachtungswinkel gegenüber der gesamten beschichteten Oberfläche geändert wird, sondern bereits bei Betrachtung der durch die Druckform verformten Beschichtung aus einem einzigen Betrachtungswinkel, so dass das erzeugte dreidimensionale Muster in verschiedenen Farben und/oder verschiedenen Helligkeitsabstufungen erscheint.

Die plättchenförmigen Effektpigmente können auch im Gemisch mit anderen, nicht plättchenförmigen Pigmenten eingesetzt werden, solange der Anteil an plättchenförmigen Effektpigmenten so groß ist, dass ein damit erzeugtes dreidimensionales Muster in der Beschichtung noch sichtbar ist. Dafür sollte der Anteil an plättchenförmigen Effektpigmenten in einer sie enthaltenden Beschichtungszusammensetzung mindestens 50 %, vorzugsweise jedoch mindestens 70 % der gesamten Pigmentbeladung der jeweiligen Beschichtungszusammensetzung entsprechen.

Die Beschichtungszusammensetzung für die erste Schicht enthält neben den plättchenförmigen Effektpigmenten auch mindestens ein Bindemittel sowie optional mindestens ein Lösemittel und gegebenenfalls einen oder mehrere Hilfsstoffe.

Als Bindemittel kommen allgemein für Beschichtungszusammensetzungen übliche Bindemittel, insbesondere solche auf Nitrocellulosebasis, Polyamidbasis, Acrylbasis, Polyvinylbutyralbasis, PVC-Basis, PUR-Basis oder geeignete Gemische aus diesen, und insbesondere Bindemittel auf UVhärtbarer Basis (radikalisch oder kationisch härtend) in Betracht. Es liegt auf der Hand, dass für das erfindungsgemäße Verfahren Bindemittel für die erste und ggf. auch für die zweite Beschichtungszusammensetzung, jedenfalls jedoch für die die plättchenförmigen Effektpigmente enthaltende Beschichtungszusammensetzung, ausgewählt werden, die nach dem Verfestigen der entsprechenden Schicht transparent sind, so dass das durch die Ausrichtung der plättchenförmigen Effektpigmente gebildete dreidimensionale Muster in der verfestigten Schicht optisch erkennbar ist.

Soll auf einer solchen Schicht eine Effektpigment-freie Schutzschicht aufgebracht werden, enthält diese ebenfalls ein nach dem Verfestigen transparentes Bindemittel. Die entsprechenden Bindemittel sind dem Fachmann geläufig.

Des weiteren enthält die Beschichtungszusammensetzung für die erste Schicht optional auch mindestens ein Lösemittel, welches aus Wasser und/oder organischen Lösemitteln oder aus organischen Lösemittelgemischen besteht.

Als organische Lösemittel können alle in den genannten Beschichtungsverfahren üblicherweise verwendeten Lösemittel, beispielsweise verzweigte oder unverzweigte Alkohole, Aromaten oder Alkylester, wie Ethanol, 1-Methoxy-Propanol, 1-Ethoxy-2-propanol, Ethylacetat, Butylacetat, Toluol, etc., oder deren Gemische verwendet werden.

Ebenso können der Beschichtungszusammensetzung allgemein gebräuchliche Additive wie Füllstoffe, weitere Farbpigmente oder Farbstoffe, beispielsweise Ruß, UV-Stabilisatoren, Inhibitoren, Flammschutzmittel, Gleitmittel, Dispergiermittel, Redispergiermittel, Entschäumer, Verlaufsmittel, Filmbildner, Haftvermittler, Trocknungsbeschleuniger, Trocknungsverzögerer, Fotoinitiatoren etc. zugegeben werden.

Die Beschichtungszusammensetzung für die zweite Schicht kann bezüglich der Bindemittel, Lösemittel und Hilfsstoffe ähnlich der ersten Schicht zusammengesetzt sein. Da die zweite Schicht im Gegensatz zur ersten Schicht aber nicht notwendigerweise einen plastischen, unverfestigten Zustand aufweisen muss, kann die Beschichtungszusammensetzung für die zweite Schicht auch lediglich aus einem Pigmentpulver aus plättchenförmigen Effektpigmenten oder aus einer üblichen Pulverlackbeschichtungszusammensetzung, die plättchenförmige Effektpigmente enthält, bestehen.

Es versteht sich von selbst, dass die konkrete stoffliche Zusammensetzung der jeweiligen Beschichtungszusammensetzung und deren Viskosität von der Art der gewählten Beschichtungsverfahren und dem jeweiligen Bedruckstoff abhängig sind. Dabei wird der Feststoffgehalt der Beschichtungszusammensetzung je nach verwendetem Verfahren, Beschichtungstemperatur, Beschichtungsgeschwindigkeit und Art der Bindemittel, Additive und Art des Bedruckstoffes so eingestellt, dass die Viskosität der Beschichtungszusammensetzung ausreicht, um eine möglichst optimale Übertragung der Beschichtungszusammensetzung von der jeweiligen Beschichtungsapparatur auf den Bedruckstoff bzw. auf die erste Schicht zu erzielen. Diese Einstellung der Viskosität erfolgt direkt an der Beschichtungsmaschine und kann ohne erfindungsgemäßes Zutun beruhend auf den Angaben des Herstellers der Beschichtungszusammensetzung oder dem Fachwissen des Druckers bzw. Beschichtungsexperten ausgeführt werden. Die Bestimmung der Viskosität erfolgt in der Regel über die Ermittlung der Auslaufzeit bei Normtemperatur und bestimmter relativer Luftfeuchtigkeit in einem genormten Auslaufbecher (z.B. DIN 4 Auslaufbecher der Fa. Fritz Arndt "Frikmar" KG, Deutschland, oder der Fa. Erichsen GmbH & Co. KG, Deutschland) oder durch Messen mit einem Rheometer (z. B. der Fa. Brookfield E.L.V. GmbH, Lorch, Deutschland).

Vorzugsweise wird die erste, aber besonders bevorzugt sowohl die erste als auch die zweite Beschichtungszusammensetzung mittels eines Flexodruckverfahrens oder eines Offsetüberdrucklackierungsverfahrens auf das jeweilige Substrat aufgebracht. Dabei werden übliche Flexodruckformen und -druckwerke bzw. Offsetüberdrucklackwerke eingesetzt. Da die erzielbare Nassschichtdicke im Flexodruckverfahren relativ gering ist, nämlich nur etwa 2 bis 6 µm beträgt, liegen beim Einsatz eines solchen Verfahrens für die Erzeugung der ersten Schicht die daraufhin durch das Hochdruckwerkzeug in dieser Schicht erzielten Tiefen für die Vertiefungen praktisch geringer oder höchstens genauso tief wie die Nassschichtdicke der Schicht, nämlich im Bereich von etwa 2 bis 6 µm. Im Offsetüberdrucklackierungsverfahren gilt Analoges, allerdings sind hier etwas höhere Nassschichtdicken erzielbar.

Als technisch besonderer Vorteil des erfindungsgemäßen Verfahrens hat sich herausgestellt, dass alle Beschichtungs- und Prägeschritte, nämlich sowohl das Aufbringen der ersten und optional auch der zweiten Beschichtungszusammensetzung als auch das Verformen der ersten Beschichtung durch eine Hochdruckform, mittels Flexodruckverfahren bzw. Flexodruckformen oder entsprechend im Offsetüberdrucklackierungsverfahren erfolgen können. Dadurch wird die Erzeugung eines dreidimensionalen Musters innerhalb einer einzigen Flexodruckstrecke (alternativ Offsetüberdrucklackierung, für die gewöhnlich ebenfalls Flexodruckformen in den Lackwerken eingesetzt werden) möglich, ohne dass besondere technische Anpassungsleistungen oder zusätzliche maschinelle Investitionen erfolgen müssten.

Von besonderem Vorteil ist auch, dass der Einsatz strahlenhärtender Bindemittelsysteme, die beispielsweise per UV- oder Elektronenstrahlen ausgehärtet werden, sowohl für die erste als auch optional für die zweite Schicht erfolgen kann. Solche Systeme benötigen wenig oder gar keine flüchtigen Lösungsmittel und härten praktisch sofort unter Bestrahlung aus. Die durch den Kontakt mit der Hochdruckform verformte erste Schicht kann daher sowohl unmittelbar nach dem Entfernen der Hochdruckform als auch noch einige Zeit nach bereits erfolgtem Entfernen der Hochdruckform aus der ersten Schicht innerhalb kürzester Zeit ausgehärtet werden. Das ermöglicht ein baldiges nachfolgendes zusätzliches Beschichten ebenso wie eine mögliche sofortige Weiterverarbeitung oder Lagerung der mit dem dreidimensionalen Muster versehenen beschichteten Oberflächen. Vorzugsweise wird zumindest die erste Schicht mittels UV-Strahlung verfestigt, besonders bevorzugt aber die erste und die zweite Schicht, sofern letztere vorhanden ist.

Wie vorab bereits beschrieben, erfolgt die Verformung der ersten Schicht mit Hilfe eines Werkzeuges für den Hochdruck, also einer Druckform für den Buchdruck, Lettersetdruck oder Flexodruck. Dabei handelt es sich um Druckplatten oder Druckzylinder. Es können die üblichen Druckformen eingesetzt werden. Das erhabene Muster auf diesen Druckformen bestimmt dabei das gewünschte dreidimensionale Muster in der ersten Schicht der erfindungsgemäß erzeugten Beschichtung. Dabei bestimmt die zweidimensionale Form der erhabenen Oberfläche der Druckform die geometrische Form des Musters in der ersten Schicht (spiegelverkehrt), während die Höhe der Erhebungen auf der Druckform deren maximale Eindringtiefe in die erste Schicht bestimmt. Dabei ist hervorzuheben, dass übliche Druckformen für den Hochdruck gewöhnlich Erhebungen aufweisen, die eine deutlich größere Höhe aufweisen als die gewünschte Eindringtiefe dieser Formen in die erste Schicht. Es ist daher bei der Ausführung des erfindungsgemäßen Verfahrens darauf zu achten, dass die Eindringtiefe der Hochdruck-Druckform in die erste Schicht 10 µm nicht überschreitet. Dies wird durch einen zwar vollflächigen, aber mit geringem Anpressdruck ausgeführten Kontakt der Druckform mit der ersten Schicht und eine gezielt gesteuerte geringe Eindringtiefe, analog einem so genannten Kiss-Coating- oder Kiss-Printing-verfahren, erreicht.

Als besonders geeignet für die Durchführung des zweiten Schrittes des erfindungsgemäßen Verfahrens (Erzeugung der Vertiefungen in der ersten Schicht) haben sich Druckformen herausgestellt, die für Flexodruckverfahren üblicherweise hergestellt werden. Solche Druckformen eignen sich darüber hinaus auch für den Einsatz in Offsetüberdrucklackierungsverfahren. Die hier üblicherweise verwendeten Druckformen weisen Oberflächen aus Gummi, Elastomeren oder Photopolymeren auf, in die zur Übertragung von Bildpunkten oder Strich- und/oder Bildelementen Erhebungen, das so genannte Druckbildrelief, eingearbeitet sind. Für die Einsetzbarkeit im erfindungsgemäßen Verfahren ist es zunächst ohne größere Bedeutung, ob das Druckbildrelief hierbei mittels Lasergravur oder über ein fotographisch-chemisches Verfahren erzeugt wird. Grundsätzlich sind alle mit den üblichen Verfahren hergestellten Flexodruckformen dazu geeignet, als Druckform für den Hochdruck zur Erzeugung von Vertiefungen in der ersten Schicht im erfindungsgemäßen Verfahren eingesetzt werden zu können. Flexodruckformen, die für übliche Flexodruckverfahren, insbesondere für Rasterdruckverfahren, hergestellt werden, weisen vorzugsweise Druckpunkte auf dem Druckbildrelief auf, die mit scharfen Außenkanten versehen und mit steilen Flanken auf der Druckform versockelt sind. Dadurch wird die präzise Übertragung der gewünschten Druckpunkte beim Flexodruckverfahren erreicht, wobei auch bei zunehmendem Abrieb der Druckform das Druckbild seine äußere Form nahezu nicht verändert. Werden solche Druckformen im zweiten Schritt des erfindungsgemäßen Verfahrens als Druckform für ein Hochdruckverfahren eingesetzt, weisen die in der ersten Schicht erzeugten Vertiefungen eines einzelnen Bildpunktes ebenfalls scharfe Außenkanten und eine nahezu zylindrische Form auf. Ebenfalls scharfe Außenkanten und steile Flanken werden erhalten, wenn nach den üblichen Verfahren zur Strukturierung von Flexodruckformen statt der einzelnen Bildpunkte ununterbrochene Bild- und/oder Strichelemente auf der Flexodruckform aufgebracht werden. Mit beiden Formen werden über die entsprechende Auslenkung der plättchenförmigen Effektpigmente in der diese enthaltenden Schicht dreidimensionale Muster erhalten, die ebenfalls klar strukturierte äußere Formen aufweisen.

Für bestimmte Anwendungsfälle ist es jedoch vorteilhaft, wenn die erzeugten dreidimensionalen Muster subtilere und weichere äußere Formen aufweisen. Solche Muster ähneln beispielsweise den durch magnetische Ausrichtung plättchenförmiger Magnetpigmente erzielbaren dreidimensionalen Mustern sehr stark, die in der Regel sehr weiche Formen mit fließenden Übergängen aufweisen. Zur Erzeugung solcher dreidimensionaler Muster mittels des erfindungsgemäßen Verfahrens ist es daher bevorzugt, wenn als Druckform für ein Hochdruckverfahren Flexodruckformen eingesetzt werden, auf deren Oberfläche ununterbrochene Bild- und/oder Strichelemente angeordnet sind, die ihrerseits abgerundete Außenkanten aufweisen. Diese erhabenen Bild- und/oder Strichelemente auf einer Flexodruckform weisen in einer Ausführungsform eine planare Oberfläche und seitliche Flanken auf, bei denen der Übergang von der planaren Oberfläche zur seitlichen Flanke die Form eines Kreisbogens aufweist, dessen Länge ausgewählt ist aus der Länge eines Kreisbogens, der über einem Mittelpunktswinkel im Bereich von 10° bis 90° gebildet wird, wobei der entsprechende Radius des Kreises zwischen 0,1 und 50 µm beträgt.

In einer weiteren Ausführungsform weisen diese Bild- und/oder Strichelemente einen Querschnitt auf, der einem Kreissegment entspricht, wobei die Segmenthöhe maximal 50 µm entspricht und der Radius des entsprechenden Kreises im Bereich von etwa 100 bis 2000 µm, vorzugsweise von 100 bis 1000 µm, liegt.

Solche Flexodruckformen können mittels einer besonderen Belichtungstechnologie unter Einsatz von Fotopolymer-Druckformen erhalten werden.

Gegenstand der vorliegenden Erfindung ist auch eine Beschichtung auf einem Substrat, welche ein dreidimensionales Muster aufweist und aus einer ersten, und optional einer darauf befindlichen zweiten, jeweils verfestigten oder festen Schicht besteht, wobei mindestens eine der Schichten plättchenförmige Effektpigmente enthält, wobei die erste Schicht an ihrer Oberseite, die optional die Grenzfläche zur zweiten Schicht darstellt, Vertiefungen aufweist, die nicht tiefer als 10 µm sind.

Eine solche Beschichtung mit einem dreidimensionalen Muster ist gemäß dem oben beschriebenen erfindungsgemäßen Verfahren erhältlich.

Wie bereits vorab beschrieben, können die plättchenförmigen Effektpigmente wahlweise in der ersten, der zweiten, oder auch in beiden Schichten vorhanden sein. Bevorzugt ist die Ausführungsform, in der die plättchenförmigen Effektpigmente in der ersten Schicht enthalten sind und die zweite Schicht wahlweise eine bindemittelhaltige Schutzschicht ohne Effektpigmente oder gar nicht vorhanden ist.

In der Schicht der erfindungsgemäßen Beschichtung, die die plättchenförmigen Effektpigmente enthält, liegen diese an den Stellen, an denen die erste Schicht keine Vertiefungen aufweist, in paralleler Ausrichtung zur Oberfläche des Substrates vor, wohingegen sie an den Stellen, an denen die erste Schicht mit Vertiefungen versehen ist, aus ihrer parallelen Ausrichtung herausgelenkt sind und damit in der festen oder verfestigten Schicht in einem Winkel zur Substratoberfläche hin ausgerichtet vorliegen. Dabei kann die Ausrichtung in einem spitzen, steilen oder rechten Winkel zur Substratoberfläche hin vorliegen. Diese Ausrichtung der plättchenförmigen Effektpigmente führt zu einem an den betreffenden Stellen veränderten optischen Verhalten der Effektpigmente, insbesondere hinsichtlich ihrer Licht reflektierenden Eigenschaften, ihres Glanzes und/oder ihrer Helligkeit. Damit wird für den Betrachter, der die Beschichtung in der Regel aus der Normalen oder aus einem steilen Winkel heraus betrachtet, ein verändertes optisches Bild wahrnehmbar, welches eine dreidimensionale Struktur aufzuweisen scheint. Wie vorab bereits beschrieben, ist die wahrgenommene dreidimensionale Struktur bei der erfindungsgemäßen Beschichtung deutlich markanter als die tatsächliche dreidimensionale Verformung der Oberfläche der ersten Schicht durch Vertiefungen, die eine maximale Tiefe von 10 µm aufweisen.

Die geringe Tiefe dieser Vertiefungen ist auch der Grund dafür, dass sie durch menschliche Berührungen, beispielsweise mit Fingern oder Handflächen, taktil nicht erfassbar sind. Das heißt, dass auch bei einer erfindungsgemäßen Beschichtung, die lediglich aus einer einzigen Schicht besteht, die Oberfläche der verfestigten Beschichtung taktil als nicht verformt wahrgenommen wird, während optisch ein dreidimensionales Muster wahrnehmbar ist, dass sich mittels der verschieden ausgerichteten plätthenförmigen Effektpigmente in der Schicht darstellt. Eine Verschmutzung der Oberfläche durch Schmutzablagerung in den Vertiefungen ist daher praktisch ausgeschlossen. Außerdem ist eine gewisse Fälschungssicherheit gegeben, da sich das Herstellungsverfahren über die reine Betrachtung und taktile Begutachtung des beschichteten Substrates nicht ohne Weiteres erschließt.

Als Substrate zur Herstellung der erfindungsgemäßen Beschichtung kommt eine Vielzahl von Substraten in Betracht, wie sie gewöhnlicherweise zur Herstellung verschiedenster dekorativer Produkte und Sicherheitsprodukte eingesetzt wird.

Dabei umfasst der Begriff dekoratives Produkt im Sinne der vorliegenden Erfindung einen breiten Bereich von Verpackungsmaterialien, Papeterieartikeln, Spezialpapieren, Textilmaterialien, Dekorationsmaterialien, Werbematerialien, Lehrmitteln, Scherzartikeln, Geschenkartikeln, Möbelbeschichtungsfolien oder -papieren, Tapeten, aber auch Materialien zur funktionellen Beschichtung und/oder künstlerischen Dekoration von Gebäuden oder Gebäudeteilen, Fahrbahnen, Schildern, Fahr- und Flugzeugen, Kunstobjekten und dergleichen.

Als Sicherheitsprodukte im Sinne der vorliegenden Erfindung werden beispielsweise Etiketten, Eintrittskarten, Fahrausweise, Pässe, Ausweisdokumente, Banknoten, Schecks, Kreditkarten, Aktien, Briefmarken, Chipkarten, Führerscheine, Urkunden, Prüfbescheinigungen, Wertmarken, Steuerbanderolen, Fahrzeugkennzeichen, Mautgebühr-Aufkleber, TÜV-Plaketten, Feinstaub-Plaketten oder Siegel angesehen, um nur typische Produkte zu nennen.

Demzufolge bestehen die erfindungsgemäß verwendeten Substrate aus Materialien wie Papier, Kartonagen, Tapeten, Laminaten, Tissue-Materialien, Holz, Metallen, insbesondere Metallfolien, Polymeren, insbesondere polymeren Folien, Sicherheitsdruckerzeugnissen oder Materialien, welche Bestandteile aus mehreren dieser Stoffe enthalten. Wie bei Papieren und Polymerfolien üblich, kann das Substrat optional auch noch elektrostatisch vorbehandelt und/oder mit einer Primerschicht und/oder einer anderen Grundierschicht versehen sein. Deshalb kann es sich bei den eingesetzten Papieren beispielsweise um ungestrichene, gestrichene oder auch satinierte Papiere oder um Papiere handeln, die eine farbige Grundierschicht aufweisen.

Diese Art von Substratmaterialien lässt sich mit gewöhnlichen Beschichtungsverfahren, insbesondere in der Mehrzahl auch mit üblichen Druckverfahren, beschichten und über den Einsatz von Werkzeugen für den Hochdruck auch mit Vertiefungen in der ersten Schicht versehen.

Selbstverständlich sind solche Substratmaterialien besonders bevorzugt, die üblicherweise mittels Druckverfahren auch in großer Stückzahl und über kontinuierliche Verfahren beschichtet werden, also alle Sorten von Papieren und Kartonagen sowie Polymer- oder Metallfolien und Verbundmaterialien aus zwei oder mehreren von diesen.

Gegenstand der vorliegenden Erfindung ist auch ein Produkt, welches eine Oberfläche aufweist, die ein dreidimensionales Muster in einer Beschichtung auf einem Substrat aus Papier, einer Kartonage, einer Tapete, einem Laminat, einem Tissue-Material, Holz, einem Polymer, einem Metall, einer polymeren Folie, einer Metallfolie, einem Sicherheitsdruckerzeugnis oder aus einem Material aufweist, welches Bestandteile aus mehreren dieser Stoffe enthält, und wobei das Substrat optional elektrostatisch vorbehandelt und/oder mit einer Primerschicht und/oder einer anderen Grundierschicht versehen ist, und wobei die Beschichtung mindestens eine erste und optional zusätzlich eine zweite Schicht aufweist, wobei die erste und/oder die zweite Schicht plättchenförmige Effektpigmente enthält, und wobei die erste Schicht Vertiefungen aufweist, die nicht tiefer als 10 µm sind.

Solche Produkte sind nach dem vorab beschriebenen erfindungsgemäßen Verfahren erhältlich und weisen die oben näher beschriebenen dreidimensionalen Muster auf.

Gegenstand der vorliegenden Erfindung ist auch die Verwendung der gemäß dem erfindungsgemäßen Verfahren hergestellten Produkte als oder für Dekorationsmaterialien oder Sicherheitserzeugnisse. Einzelheiten hierzu sind vorab ebenfalls bereits beschrieben worden.

Es ist ein besonderer Vorteil der vorliegenden Erfindung, dass mit dem erfindungsgemäßen Verfahren ein Verfahren zur Erzeugung von dreidimensionalen Mustern in Beschichtungen zur Verfügung steht, welches ohne größeren zusätzlichen apparativen und technischen Aufwand für die Erzeugung von dreidimensionalen Mustern in Beschichtungen eingesetzt werden kann, die plättchenförmige Effektpigmente enthalten. Da keine expliziten Prägewerkzeuge verwendet werden, treten größere Deformationen der aufgebrachten Schichten oder gar der Substrate nicht auf, was sowohl den apparativen Aufwand verringert, als auch mögliche nachträgliche Verschmutzungen der Endprodukte über Schmutzablagerungen in den Vertiefungen vermeiden hilft. Da alle möglichen Arten von plättchenförmigen Effektpigmenten in den Beschichtungen einsetzbar sind, sind auch in den Fällen verschiedenste optische Gestaltungen möglich, wo ohne gleichzeitig stattfindende Substratverprägungen sonst lediglich magnetisch orientierbare Pigmente eingesetzt werden könnten. Auch die bei der Verwendung von magnetisch orientierbaren Pigmenten erhältlichen fließenden und weichen dreidimensionalen optischen Erscheinungsbilder sind mittels des erfindungsgemäßen Verfahrens erhältlich, ohne dass magnetisch orientierbare plättchenförmige Pigmente und die entsprechenden aufwändigen Apparaturen eingesetzt werden müssen. Des Weiteren lässt sich das erfindungsgemäße Verfahren nahezu problemlos in bestehende Druckabläufe, und hier insbesondere in Flexodruckverfahren oder Offsetüberdrucklackierungsverfahren, eingliedern. Die schnelle und reproduzierbare Herstellung von dekorativen Massenartikeln oder Sicherheitsdokumenten ist daher mittels des erfindungsgemäßen Verfahrens auf einfache und kostengünstige Weise möglich.

Die Erfindung soll nachfolgend an Hand von Beispielen und Abbildungen näher erläutert, jedoch nicht auf diese beschränkt werden.
- Figur 1: zeigt ein gespiegeltes Bildmotiv auf einer üblichen Hochdruckform (Flexodruckform), welche zur Erzeugung von Vertiefungen in der Schicht gemäß dem erfindungsgemäßen Verfahren einsetzbar ist
- Figur 2: zeigt eine erfindungsgemäße Beschichtung mit einem dreidimensionalen Muster, hergestellt mit einer Flexodruckform entsprechend Figur 1
- Figur 3: zeigt ein flaches Druckprofil mit abgerundeten Übergängen zu den Flanken der Bildmotive auf einer Flexodruckform,

- Figur 4: zeigt eine erfindungsgemäße Beschichtung mit einem dreidimensionalen Muster, hergestellt mit einer Flexodruckform entsprechend Figur 3
- Figur 5: zeigt die erfindungsgemäße Beschichtung aus Figur 4, aufgenommen mit größerem Kontrast zur besseren Sichtbarmachung der erzielten dreidimensionalen Struktur

### Beispiel 1:

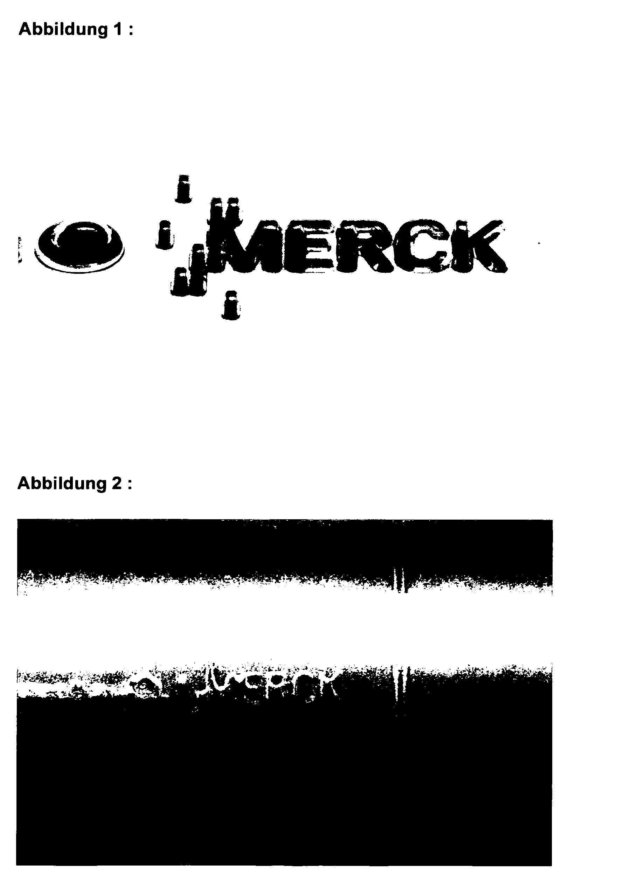

Ein handelsübliches Papiersubstrat ("Hello Silk", 200 g/m², Fa. Sappi Stockstadt GmbH, Deutschland) wird mittels einer üblichen Druckmaschine von Typ Heidelberger Speedmaster CD DUO LY6LLYY mit Doppellackwerk und vorgeschaltetem Druckwerk wie folgt beschichtet:
Zunächst wird das Substrat in einem vorgeschalteten Druckwerk vollflächig mit einer farbigen Grundierschicht versehen (Pantone® Grau 425 C in einer Druckfarbe Hi-Bryte® Pro der Firma SUN Chemical). Anschließend wird das vorbeschichtete Substrat in einem ersten Lackwerk [übliche Lackplatte CL4 der Firma DuPont, Drucklack Vegra VP 1038/50 mit 20 Gew.% Pigmentanteil [Iriodin® 103 (Teilchengröße 10-60 µm) und Iriodin® 123 (Teilchengröße 5-25 µm), 1:1-Gemisch, Hersteller Merck KGaA], Druckviskosität 50 s (DIN 4 Auslaufbecher der Fa. Erichsen), Rasterwalze der Firma Praxair (20 g/cm³, 80 L/cm², Gravur: ART®)], vollflächig beschichtet. Die Dicke der erhaltenen Nassschicht beträgt dabei etwa 10 µm. Die noch nicht verfestigte Lackoberfläche wird in einem zweiten Lackwerk mit einer weiteren Lackplatte in Kontakt gebracht. Diese Lackplatte (CL4, Stärke 1,14 mm, Hersteller DuPont, belichtet nach den Angaben des Herstellers, vergrößerter gespiegelter Ausschnitt in Figur 1) wird nicht mit Druckfarbe beaufschlagt. Sie ist mit Strichmotiven wie Texten, Piktogrammen und Linien in verschiedenen Größen versehen. Die Eindringtiefe des Druckreliefs in die erste Lackschicht beträgt maximal 10 µm. In einem üblichen UV-Trockner wird die erhaltene Druckschicht verfestigt. Das erhaltene Druckbild weist auf silbergrau schimmerndem Untergrund gut sichtbare dreidimensionale Muster in Form der auf der im zweiten Lackwerk eingesetzten Druckplatte befindlichen Strichmotive auf. Ein Ausschnitt der verfestigten Beschichtung ist in Figur 2 dargestellt. Das dreidimensionale Muster ist über Berührung mit einem Finger nicht tastbar.

### Beispiel 2:

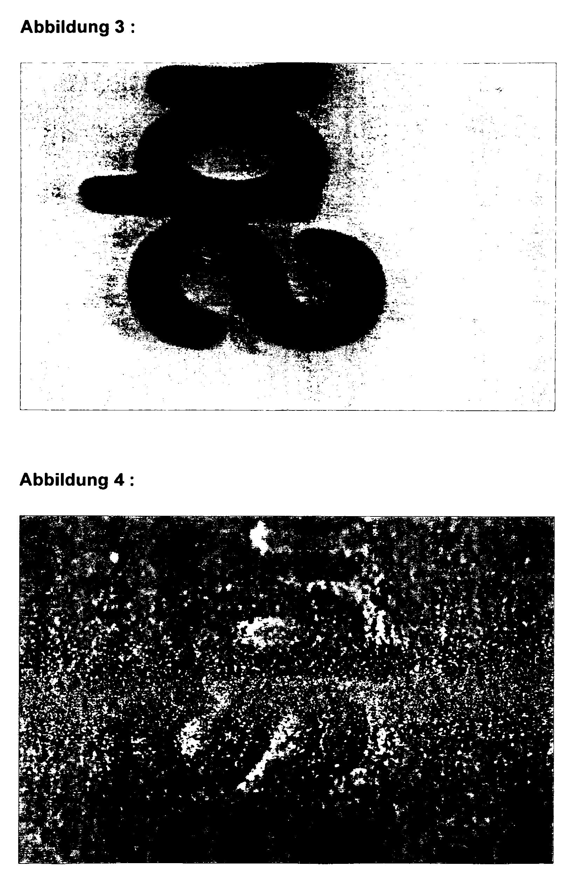

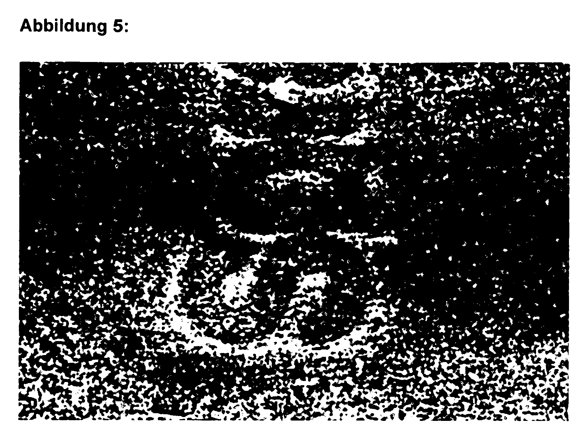

Beispiel 1 wird wiederholt, mit der Änderung, dass für das zweite Lackwerk anstatt einer gemäß der üblichen Methode belichteten Flexodruckform eine Lackplatte (CL4 der Firma DuPont, siehe Beispiel 1) eingesetzt wird, welche nach einem besonderen Belichtungsverfahren belichtet wird (Rückseitenbelichtung für den Sockel (100 s) und für das Relief (250 s), vergrößerter Ausschnitt in Figur 3). Das erhaltene dreidimensionale Muster in der Beschichtung ist in den Figuren 4 und 5 dargestellt. Das dreidimensionale Muster ist in der silbergrau schimmernden Beschichtung mit einem weichen, abgerundeten Erscheinungsbild deutlich wahrnehmbar, jedoch nicht tastbar.

## Patentansprüche

1. Verfahren zur Erzeugung von dreidimensionalen Mustern in Beschichtungen, wobei eine fliessfähige Beschichtungszusammensetzung unter Bildung einer ersten Schicht auf ein Substrat aufgebracht und die erste Schicht in einem nicht verfestigten Zustand mit einem Werkzeug, welches eine Oberfläche mit Erhebungen aufweist, derart in Kontakt gebracht wird, dass die Erhebungen des Werkzeugs Vertiefungen in der ersten Schicht erzeugen, das Werkzeug entfernt wird, und optional die erste, Vertiefungen enthaltende Schicht mit einer zweiten Beschichtungszusammensetzung unter Bildung einer zweiten Schicht beschichtet wird, und die Schicht(en) verfestigt wird (werden),
wobei mindestens eine der Beschichtungszusammensetzungen plättchenförmige Effektpigmente enthält, **dadurch gekennzeichnet, dass** das Werkzeug eine Druckform für ein Hochdruckverfahren, nämlich eine Druckform für den Buchdruck, Lettersetdruck oder Flexodruck, ist und die Vertiefungen in der ersten Schicht nicht tiefer als 10 µm sind.

2. Verfahren nach Anspruch 1, **dadurch gekennzeichnet, dass** eine erste und eine zweite Schicht aufgebracht werden und die erste, Vertiefungen enthaltende Schicht vor dem Aufbringen der zweiten Schicht verfestigt wird.

3. Verfahren nach Anspruch 1, **dadurch gekennzeichnet, dass** eine erste und eine zweite Schicht aufgebracht werden und die erste, Vertiefungen enthaltende Schicht und die zweite Schicht gleichzeitig verfestigt werden.

4. Verfahren nach einem oder mehreren der Ansprüche 1 bis 3, **dadurch gekennzeichnet, dass** das Werkzeug eine Flexographie-Druckform ist.

5. Verfahren nach einem oder mehreren der Ansprüche 1 bis 4, **dadurch gekennzeichnet, dass** die erste Schicht plättchenförmige Effektpigmente enthält.

6. Verfahren nach einem oder mehreren der Ansprüche 1 bis 4, **dadurch gekennzeichnet, dass** die zweite Schicht vorhanden ist und plättchenförmige Effektpigmente enthält.

7. Verfahren nach einem oder mehreren der Ansprüche 1 bis 6, **dadurch gekennzeichnet, dass** die erste und/oder die zweite Schicht mittels eines Druckverfahrens aufgebracht werden.

8. Verfahren nach Anspruch 7, **dadurch gekennzeichnet, dass** es sich bei dem Druckverfahren um ein Tiefdruckverfahren, ein Siebdruckverfahren, ein Papier-Beschichtungs-Verfahren, ein Flexodruck-Verfahren, ein Tampondruckverfahren, ein Offsetdruckverfahren, ein Offsetüberdrucklackierungsverfahren oder Bronzierverfahren handelt.

9. Verfahren nach einem oder mehreren der Ansprüche 1 bis 8, **dadurch gekennzeichnet, dass** die erste und/oder die zweite Schicht mittels eines Flexodruckverfahrens oder eines Offsetüberdrucklackierungsverfahrens aufgebracht wird.

10. Verfahren nach einem oder mehreren der Ansprüche 1 bis 9, **dadurch gekennzeichnet, dass** die erste und/oder die zweite Schicht mittels UV-Strahlung verfestigt wird.

11. Verfahren nach einem oder mehreren der Ansprüche 1 bis 10, **dadurch gekennzeichnet, dass** die plättchenförmigen Effektpigmente ausgewählt sind aus der Gruppe Perlglanzpigmente, Interferenzpigmente, Metalleffektpigmente, Flüssigkristallpigmente (Liquid Crystal Pigments), plättchenförmige funktionelle Pigmente, plättchenförmige strukturierte Pigmente, oder ein Gemisch aus diesen.

12. Beschichtung auf einem Substrat, erhältlich nach einem Verfahren gemäß einem oder mehreren der Ansprüche 1 bis 11, wobei die Beschichtung ein dreidimensionales Muster aufweist und aus einer ersten, und optional einer darauf befindlichen zweiten, jeweils verfestigten oder festen Schicht besteht, wobei mindestens eine der Schichten plättchenförmige Effektpigmente enthält und wobei die erste Schicht an ihrer Oberseite Vertiefungen aufweist, die nicht tiefer als 10 µm sind.

13. Beschichtung auf einem Substrat nach Anspruch 12, wobei es sich bei dem Substrat um ein Papier, eine Kartonage, eine Tapete, ein Laminat, ein Tissue-Material, Holz, ein Polymer, ein Metall, ein Sicherheitsdruckerzeugnis oder ein Material handelt, welches Bestandteile aus mehreren dieser Stoffe enthält, und wobei das Substrat optional elektrostatisch vorbehandelt und/oder mit einer Primerschicht und/oder einer anderen Grundierschicht versehen ist.

14. Produkt, welches eine Beschichtung auf einem Substrat gemäß Anspruch 12 oder 13 aufweist.

15. Verwendung eines Produktes gemäß Anspruch 14 als Dekorationsmaterial oder Sicherheitserzeugnis.

## Claims

1. Process for the production of three-dimensional patterns in coatings, in which a flowable coating composition is applied to a substrate with formation of a first layer, and the first layer in an unsolidified state is brought into contact with a tool which has a surface with raised elements in such a way that the raised elements of the tool produce recesses in the first layer, the tool is removed, and the first layer containing recesses is optionally coated with a second coating composition with formation of a second layer, and the layer(s) is (are) solidified, where at least one of the coating compositions comprises flake-form effect pigments, **characterised in that** the tool is a printing plate for a relief printing process, namely a printing plate for letterpress printing, letterset printing or flexographic printing, and the recesses in the first layer are not deeper than 10 µm.

2. Process according to Claim 1, **characterised in that** a first layer and a second layer are applied, and the first layer containing recesses is solidified before the application of the second layer.

3. Process according to Claim 1, **characterised in that** a first layer and a second layer are applied, and the first layer containing recesses and the second layer are solidified simultaneously.

4. Process according to one or more of Claims 1 to 3, **characterised in that** the tool is a flexography printing plate.

5. Process according to one or more of Claims 1 to 4, **characterised in that** the first layer comprises flake-form effect pigments.

6. Process according to one or more of Claims 1 to 4, **characterised in that** the second layer is present and comprises flake-form effect pigments.

7. Process according to one or more of Claims 1 to 6, **characterised in that** the first layer and/or second layer are applied by means of a printing process.

8. Process according to Claim 7, **characterised in that** the printing process is a gravure printing process, a screen printing process, a paper coating process, a flexographic printing process, a pad printing process, an offset printing process, an offset overprint varnishing process or bronzing process.

9. Process according to one or more of Claims 1 to 8, **characterised in that** the first layer and/or second layer is applied by means of a flexographic printing process or an offset overprint varnishing process.

10. Process according to one or more of Claims 1 to 9, **characterised in that** the first layer and/or second layer is solidified by means of UV radiation.

11. Process according to one or more of Claims 1 to 10, **characterised in that** the flake-form effect pigments are selected from the group pearlescent pigments, interference pigments, metal-effect pigments, liquid-crystal pigments, flake-form functional pigments, flake-form structured pigments, or a mixture thereof.

12. Coating on a substrate, obtainable by a process according to one or more of Claims 1 to 11, where the coating has a three-dimensional pattern and consists of a first layer and optionally a second layer located thereon, in each case solidified or solid, where at least one of the layers comprises flake-form effect pigments and where the first layer has on its upper side recesses which are not deeper than 10 µm.

13. Coating on a substrate according to Claim 12, where the substrate is a paper, a cardboard, a wallpaper, a laminate, a tissue material, wood, a polymer, a metal, a security printing product or a material which comprises constituents of a plurality of these substances, and where the substrate has optionally been electrostatically pretreated and/or provided with a primer layer and/or another anchoring layer.

14. Product which has a coating on a substrate according to Claim 12 or 13.

15. Use of a product according to Claim 14 as decoration material or security product.

## Revendications

1. Procédé pour la fabrication de motifs tridimensionnels dans des revêtements, dans lequel une composition de revêtement pouvant fluer est appliquée sur un substrat lors de la formation d'une première couche, et la première couche dans un état non solidifié est amenée en contact avec un outil qui comporte une surface munie d'éléments rehaussés de telle sorte que les éléments rehaussés de l'outil produisent des évidements dans la première couche, l'outil est enlevé, et la première couche contenant des évidements est en option revêtue d'une seconde composition de revêtement lors de la formation d'une seconde couche, et la/les couche(s) est/sont solidifiée(s), où au moins l'une des compositions de revêtement comprend des pigments d'effet sous forme de flocons, **caractérisé en ce que** l'outil est une plaque d'impression pour un procédé d'impression en relief, c'est-à-dire une plaque d'impression pour une impression typographique directe, une impression typographique indirecte ou une impression flexographique, et les évidements dans la première couche ne sont pas plus profonds que 10 µm.

2. Procédé selon la revendication 1, **caractérisé en ce qu'**une première couche et une seconde couche sont appliquées, et la première couche contenant des évidements est solidifiée avant l'application de la seconde couche.

3. Procédé selon la revendication 1, **caractérisé en ce qu'**une première couche et une seconde couche sont appliquées, et la première couche contenant des évidements et la seconde couche sont solidifiées simultanément.

4. Procédé selon une ou plusieurs des revendications 1 à 3, **caractérisé en ce que** l'outil est une plaque d'impression flexographique.

5. Procédé selon une ou plusieurs des revendications 1 à 4, **caractérisé en ce que** la première couche comprend des pigments d'effet sous forme de flocons.

6. Procédé selon une ou plusieurs des revendications 1 à 4, **caractérisé en ce que** la seconde couche est présente et comprend des pigments d'effet sous forme de flocons.

7. Procédé selon une ou plusieurs des revendications 1 à 6, **caractérisé en ce que** la première couche et/ou la seconde couche est/sont appliquée(s) au moyen d'un procédé d'impression.

8. Procédé selon la revendication 7, **caractérisé en ce que** le procédé d'impression est un procédé d'impression par gravure, un procédé d'impression par sérigraphie, un procédé de revêtement de papier, un procédé d'impression flexographique, un procédé d'impression au tampon, un procédé d'impression offset, un procédé d'application de vernis par surimpression offset ou un procédé de bronzage.

9. Procédé selon une ou plusieurs des revendications 1 à 8, **caractérisé en ce que** la première couche et/ou la seconde couche est/sont appliquée(s) au moyen d'un procédé d'impression flexographique ou au moyen d'un procédé d'application de vernis par surimpression offset.

10. Procédé selon une ou plusieurs des revendications 1 à 9, **caractérisé en ce que** la première couche et/ou la seconde couche est/sont solidifiée(s) au moyen d'un rayonnement UV.

11. Procédé selon une ou plusieurs des revendications 1 à 10, **caractérisé en ce que** les pigments d'effet sous forme de flocons sont choisis parmi le groupe constitué par des pigments perlescents, des pigments d'interférence, des pigments à effet métallique, des pigments à cristaux liquides, des pigments fonctionnels sous forme de flocons, des pigments structurés sous forme de flocons, ou un mélange afférent.

12. Revêtement sur un substrat, pouvant être obtenu au moyen d'un procédé selon une ou plusieurs des revendications 1 à 11, où le revêtement comporte un motif tridimensionnel et est constitué par une première couche et en option, par une seconde couche située dessus, chacune étant solidifiée ou solide, où au moins l'une des couches comprend des pigments d'effet sous forme de flocons et où la première couche comporte, sur son côté supérieur, des évidements qui ne sont pas plus profonds que 10 µm.

13. Revêtement sur un substrat selon la revendication 12, où le substrat est un papier, un carton, un papier peint, un stratifié, un matériau de tissu, du bois, un polymère, un métal, un produit d'impression de sécurité ou un matériau qui comprend des constituants d'une pluralité de ces substances, et où le substrat a été, en option, prétraité électro-statiquement et/ou muni d'une couche d'apprêt et/ou d'une autre couche d'ancrage.

14. Produit qui comporte un revêtement sur un substrat selon la revendication 12 ou 13.

15. Utilisation d'un produit selon la revendication 14 en tant que matériau de décoration ou produit de sécurité.
